# EUROPEAN PATENT APPLICATION

(11) **EP 2 818 236 A1**
(43) Date of publication of application: **31.12.2014**
(21) Application number: 13751179.6
(22) Date of filing: 22.02.2013
(51) Int. Cl.: B01F 15/04, B01F 3/08, B01F 5/00

(54) **PROPORTIONAL MIXING SYSTEM**

(30) Priority: 23.02.2012 JP 2012038033
(71) Applicant: Meiji Co., Ltd., Tokyo 136-8908 (JP)
(72) Inventor: KAMIYA Tetsu, Odawara-shi Kanagawa 250-0862 (JP); KASHIWAGI Kazunori, Odawara-shi Kanagawa 250-0862 (JP)
(74) Representative: Novagraaf Technologies
(86) International application number: PCT/JP2013/054470
(87) International publication number: WO 2013/125671

(57) **Abstract**

Provided is a highly precise system for controlling proportional mixing, wherein the proportional mixing system is capable of maintaining the mixture ratio of flow rates of a primary liquid and a secondary liquid at a predetermined target mixture ratio. This highly precise proportional mixing system maintains the mixture ratio of flow rates of a primary liquid and a secondary liquid to be constant while recognizing an error integrated retroactively using the integrated flow rates of the primary liquid and a secondary liquid. This highly precise proportional mixing system also estimates future integrated error from past error trends to control the instantaneous flow rate of the primary liquid and and/or secondary liquid.

## Description

### BACKGROUND

### Technical Field

The present invention relates to a proportional mixture control system that is utilized in the manufacturing process for producing various kinds of beverages or drinks, and more particularly to a system for allowing the proportional mixture to be performed with the high precision.

### Prior Art

Heretofore, the various proportional mixture control methods have been proposed.

For example, Patent Application (unexamined) No. 2005-348697 (Patent Document 1) and Patent Application (unexamined) No. 2009-100773 (Patent Document 2) disclose the respective proportional mixing methods that are used to manufacture the processed cheese and the like, wherein each of the methods includes the steps of heating and melting the processed cheese and the like followed by cooling it down to the particular temperature and performing the proportional mixture of the resulting lactic acid bacteria (live bacteria) on the inline basis under the bacteria-free condition.

International Patent Application (unexamined) No. WO2007/72901 (Patent Document 3) also discloses the method of manufacturing the processed cheese and the like, wherein the method includes the steps of heating and melting the processed cheese and the like followed by cooling it down to the particular temperature and performing the proportional mixture of the resulting microscopic lactic acid bacteria (live bacteria) on the inline basis under the bacteria-free condition. In addition, International Patent Application (unexamined) No. WO2008/44533 (Patent Document 4) discloses the method of manufacturing the soft yoghurt, wherein the method includes the steps of proportionally mixing the yoghurt base and any accessory materials (such as sugar liquid, fruit juice and the like) on the inline basis under the bacteria-free condition.

Furthermore, Patent Application (unexamined) No. H6 (1994)-114377 (Patent Document 5) discloses the apparatus for adding a chloride agent and the art of controlling the apparatus.

In addition, Patent Application (unexamined) No. S61 (1986)- 42326 (Patent Document 6) discloses the art of utilizing the integrated pulses for performing the proportional mixture. During the stage of the particular integrated pulses, the secondary liquid valve will be opened for a certain time so that the flow rate can be controlled. In this art, the addition of the secondary liquid is controlled by the On/Off action, and then the desired mixture ratio can be obtained with the high precision within a short time.

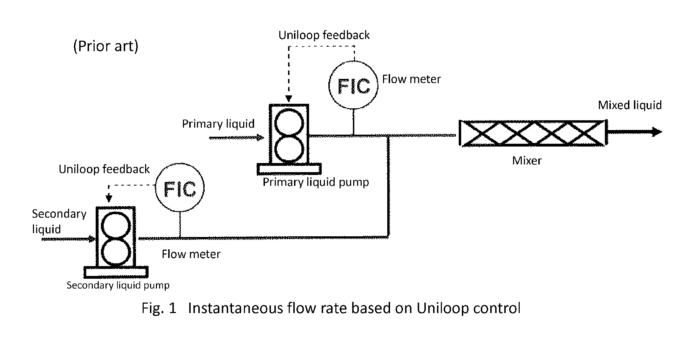

It may be understood from the above description that the system for controlling the proportional mixture ratio is used in the process for manufacturing the various kinds of beverages or drinks or foods and drinks or in other manufacturing fields for processing the fluids such as detergents, and it is generally known that the system is implemented in the form of the method as shown in Fig. 1. In this method, the flow rate of the primary liquid and the flow rate of the secondary liquid (added liquid) will be measured as the respective instantaneous flow rates, and those flow rates will be controlled independently of each other through the uniloop feedback control.

Although the conventional prior art method of Fig. 1 may have merits in that the control is not complicated and comparatively simple, it has been pointed out that there are still demerits in that if either of the flow rate of the primary liquid or the flow rate of the secondary liquid should be caused to vary by any external disturbances, it is impossible to assure the particular mixture ratio with the high precision.

From the aspect of assuring the highly precise proportional mixture and because of the uniloop feedback control, the conventional prior art system has a fatal disadvantage in that if either of the flow rate of the primary liquid or the flow rate of the secondary liquid should be caused to vary by any external disturbances, the other of the flow rate of the primary liquid or the flow rate of the secondary liquid that has not been affected by that variation could not be varied by responding to the variation in order to assure the mixture ratio for the other flow rate of the primary liquid or secondary liquid.

When the pump is stopped or when the system is to be started up, there are different elapse periods of time before the primary liquid and the secondary liquid can reach their respective target flow rate values. For this reason, there are situations in which the particular mixture ratio might deviate from their respective target flow rate values. In order to avoid such situations, therefore, there is also a system that is specifically designed for minimizing the possible deviations (errors) from the respective flow rate values of the primary liquid and the secondary liquid that might occur when the pump is stopped or when the system is to be started up. For this purpose, a servo-motor may be used in the primary liquid pump and in each of the secondary liquid pumps in order to control (adjust) the speeds of the respective servo-motors so that the speeds can be increased or decreased.

It should be noted, however, that since the conventional prior art system shown in Fig. 1 is based on the uniloop feedback control, there is still a fatal disadvantage in that if either of the flow rate of the primary liquid or the flow rate of the secondary liquid should be caused to vary by any external disturbances, the other of the flow rate of the primary liquid or the flow rate of the secondary liquid cannot be varied by responding to the above variation in order to allow the mixture ratio to be assured for the other flow rate.

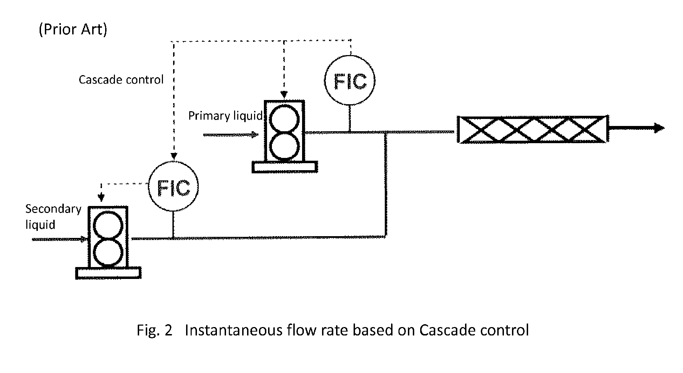

If the proportional mixture control system is such that the respective flow rates of the primary liquid and secondary liquid are very likely to be affected by the external disturbances, it may be possible to employ the method as shown in Fig. 2. In this method, the cascade control is used and the flow rate of the secondary liquid will be controlled (adjusted) by considering the possible variation in the flow rate of the primary liquid.

In this prior art system (Fig. 2), it is noted that if the flow rate of the primary liquid is caused to vary by any external disturbances, the flow rate of the secondary liquid will also be varied accordingly. However, this system has a disadvantage in that its control will become complicated. It is also noted that if the variable for the PID control parameter is set improperly or if the flow rate of the primary liquid is always caused to vary by any external disturbances, it may be possible that the next target value will be set prematurely before the instantaneous flow rate of the secondary liquid has reached its current target value, causing the mixture ratio for the primary and secondary liquids to be unstable. As the result, the errors that may occur for the mixture ratio might become greater as compared against the uniloop feedback control (Fig. 1).

### PRIOR TECHNICAL DOCUMENTS

### PATENT DOCUMENTS

Patent Document 1: Patent Application (unexamined) No. 2005-348697
Patent Document 2: Patent Application (unexamined) No. 2009-100773
Patent Document 3: International Application (unexamined) No. WO2007/72901
Patent Document 4: International Application (unexamined) No. WO2008/44533
Patent Document 5: Patent Application (unexamined) No. H6-114377
Patent Document 6: Patent Application (unexamined) No. S61-42326

### SUMMARY OF THE INVENTION

In view of the problems associated with the prior art, one object of the present invention is to propose a highly precise proportional mixing system in which the particular mixture ratio that has been set as the target for the respective flow rates of the primary and secondary liquids can be maintained to be the target mixture ratio.

More specifically, another object of the present invention is to propose a highly precise proportional mixing system in which even if there is any variation in the flow rate of the primary liquid, the flow rate of the secondary liquid (the flow rate of the secondary liquid to be added to or mixed with the primary liquid) can be varied accordingly by responding to such variation. This will permit the particular mixture ratio of the respective flow rates of the primary and secondary liquids to be restored to the target mixture rate within a short period of time and to be maintained to be the same as the target mixture ratio.

The invention according to Claim 1 provides a proportional mixing system for mixing a primary liquid being delivered from a primary liquid pump to a mixer through a primary liquid conduit together with a secondary liquid being delivered from a secondary liquid pump to the primary liquid conduit through a secondary liquid conduit connected to the primary liquid conduit and then being added to the primary liquid, said mixture of the primary and secondary liquids being performed according to a predetermined mixture ratio, wherein the proportional mixing system comprises:
a first flow rate control means disposed in the primary liquid conduit and operated at every time of the predetermined period of time to detect the flow rate of the primary liquid in the primary liquid conduit for providing output in the digital forms in response to the detected flow rate and for controlling, in the digital forms, the flow rate of the primary liquid in the primary liquid conduit;
a second flow rate control means disposed in the secondary liquid conduit and operated at every time of the predetermined period of time to detect the flow rate of the secondary liquid in the secondary liquid conduit for providing output in the digital forms in response to the detected flow rate and for controlling, in the digital forms, the flow rate of the secondary liquid in the secondary liquid conduit;
based on the flow rate of the primary liquid in the primary liquid conduit and the flow rate of the secondary liquid in the secondary liquid conduit that have been provided in the digital forms by the first flow rate control means and the second flow rate control means,
an instantaneous flow rate value computing means for computing an instantaneous flow rate value of the primary liquid and an instantaneous flow rate value of the secondary liquid at every time when the predetermined period of time will have elapsed;
an actual flow rate value computing means for computing a primary liquid actual integrated flow rate value of the primary liquid and a secondary liquid actual integrated flow rate value at every time when the predetermined period of time will have elapsed;
an estimated integrated flow rate computing means for computing an estimated primary liquid integrated flow rate value being expected for the primary liquid and/or an estimated secondary liquid integrated flow rate value being expected for the secondary liquid at every time when the next predetermined period of time successively following the elapsed predetermined period of time during which the actual integrated flow rate value was computed will have elapsed one or more times; and
based on the computed result provided in the digital forms by the estimated integrated flow rate value computing means and the predetermined mixture ratio,
a third flow rate control means for controlling the flow rate of the primary liquid in the primary liquid conduit and/or the flow rate of the secondary liquid in the secondary liquid conduit.

The invention according to Claim 2 provides a proportional mixing system as defined in Claim 1, wherein the third flow rate control means includes:
using the estimated primary liquid integrated flow rate value as computed by the estimated integrated flow rate value computing means and the predetermined mixture ratio,
a target secondary liquid integrated flow rate value computing means for computing a target secondary liquid integrated flow rate value intended for the secondary liquid at every time when the next predetermined period of time successively following the elapsed predetermined period of time during which the actual integrated flow rate value was computed will have elapsed one or more times; and
a target secondary liquid instantaneous flow rate value computing means for computing a target secondary liquid instantaneous flow rate value intended by the secondary liquid in the secondary liquid conduit so that it can agree with the target secondary liquid flow rate value as computed, wherein based on the target secondary instantaneous flow rate values as computed, the second flow rate control means is controlled so that the secondary flow rate in the secondary liquid conduit can agree with the target secondary liquid instantaneous flow rate value.

The invention according to Claim 3 provides a proportional mixing system as defined in Claim 1, wherein the third flow rate control means includes:
using the estimated secondary liquid integrated flow rate value as computed by the estimated integrated flow rate value computing means and the predetermined mixture ratio,
a target primary liquid integrated flow rate value computing means for computing the target primary liquid integrated flow rate value intended by the primary liquid at every time when the next predetermined period of time successively following the elapsed predetermined period of time during which the actual integrated flow rate value was computed will have elapsed one or more times; and
a target primary liquid instantaneous flow rate value computing means for computing a target primary liquid instantaneous flow rate value intended for the primary liquid in the primary liquid conduit so that it can agree with the target primary liquid integrated flow rate value as computed, wherein based on the target primary liquid flow rate value as computed, the first flow rate control means is controlled so that the primary liquid flow rate in the primary liquid conduit can agree with the target primary liquid flow rate value as computed.

The invention according to Claim 4 provides a proportional mixing system as defined in Claim 1, wherein the secondary liquid conduit connected to the primary liquid conduit includes a plurality of secondary liquid conduits each being connected to each corresponding one of a plurality of secondary liquid pumps each of which delivers a different secondary liquid;
the second flow rate control means is disposed in each of the plurality of secondary liquid conduits and is operated to detect the flow rate of each of the different secondary liquids in each of the plurality of secondary liquid conduits at every time of the predetermined period of time for providing output in the digital forms of the detected flow rates and controlling, in the digital forms, the flow rates of the plurality of secondary liquids in the plurality of secondary liquid conduits in response to the respective detected flow rates;
based on the flow rate of the primary liquid in the primary liquid conduit as provided in the digital forms by the first flow rate control means and the flow rate of each of the secondary liquid in each of the secondary liquid conduits as provided in the digital forms by the second flow rate control means,
the instantaneous flow rate computing means, the actual integrated flow rate value computing means and the estimated integrated flow rate value computing means are each operated to compute the instantaneous flow rate value of the primary liquid and the flow rate value of each of the plurality of secondary liquids, and to compute the primary liquid actual integrated flow rate value and the secondary liquid actual integrated flow rate value of each of the plurality of secondary liquids at the time when the predetermined period of time will have elapsed, and
the instantaneous flow rate computing means, the actual integrated flow rate value computing means and the estimated integrated flow rate value computing means are each operated to compute the estimated primary liquid integrated flow rate value being expected for the primary liquid and/or the estimated secondary liquid integrated flow rate being expected for each of the plurality of secondary liquids at every time when the next predetermined period of time successively following the elapsed predetermined period of time during which the actual integrated flow rate value was computed will have elapsed one or more times; and
based on the computed results as provided in the digital forms by the estimated integrated flow rate value computing means and the predetermined mixture ratio, the third flow rate control means is operated to control the flow rate of the primary liquid in the primary liquid conduit and/or the flow rate of each of the plurality of secondary liquids in each of the plurality of secondary liquid conduits.

The invention according to Claim 5 provides a proportional mixing system as defined in Claim 4, wherein the third flow rate control means includes:
using the estimated primary liquid integrated flow rate value as provided in the digital forms by the estimated integrated flow rate value computing means and the predetermined mixture ratio,
a target secondary liquid integrated flow rate value computing means for computing the target secondary liquid integrated flow rate value intended by each of the plurality of secondary liquids at every time when the next predetermined period of time successively following the elapsed predetermined period of time during which the actual integrated flow rate value computed will have elapsed one or more times; and
a target secondary liquid instantaneous flow rate value computing means for computing the target secondary liquid instantaneous flow rate value intended by each of the plurality of secondary liquids in each of the plurality of secondary liquid conduits so that it can agree with the target secondary liquid flow rate value as computed, wherein
based on the target secondary liquid flow rate value as computed,
the third flow rate control means is operated to control the second liquid flow rate control means so that the flow rate of each of the plurality of secondary liquids in each of the plurality of secondary liquid conduits can agree with the target secondary liquid instantaneous flow rate as computed.

### ADVANTAGES OF THE INVENTION

As one of its advantageous features, the proportional mixing system provided by the present invention is the system for controlling the proportional mixture so that the particular mixture ratio can be maintained to be the target mixture ratio of the primary and secondary liquids.

As another of its advantageous features, the present invention provides the highly precise proportional mixing system in which even if there is any variation in the primary liquid flow rate, the secondary liquid flow rate (added flow rate or mixed flow rate) can be varied accordingly by responding to that variation, and therefore the particular mixture ratio can be restored within a short period of time to the target mixture ratio for the respective flow rates of the primary and secondary liquids so that the particular mixture ratio can be maintained to be the target mixture ratio. When the highly precise proportional mixture occurs as described above, it should be noted that the secondary liquid is not limited to a single liquid or a single class of the liquid but may be two or more liquids or two or more classes of the liquid.

### BRIEF DESCRIPTION OF DRAWINGS

Fig. 1 is a concept diagram illustrating the conventional prior art proportional mixing system based on the uniloop feedback control;
Fig. 2 is a concept diagram illustrating the conventional prior art proportional mixing system based on the cascade control;
Fig. 3 is a concept diagram illustrating one example of the proportional mixing system of the present invention;
Fig. 4 is a concept diagram illustrating an example of the response returned from the conventional prior art proportional mixing control system;
Fig. 5 is a concept diagram illustrating an example of the response returned from the proportional mixing control system of the present invention;
Fig. 6 represents, in the graph forms, the results obtained by simulating the situation in accordance with the conventional prior art proportional mixing control system versus the proportional mixing control system of the present invention in which if there is any variation in the primary liquid instantaneous flow rate, the secondary liquid instantaneous flow rate will be varied accordingly by responding to that variation;
Fig. 7 represents, in the graph forms, the results obtained by simulating the situation in accordance with the conventional prior art proportional mixing control system versus the proportional mixing control system of the present invention in which if there is any variation in the primary liquid instantaneous flow rate, the errors of the secondary liquid integrated flow rate will be varied accordingly by responding to that variation;
Fig. 8 represents, in the graph forms, the results obtained by simulating the situation in accordance with the conventional prior art proportional mixing control system versus the proportional mixing control system of the present invention in which if there is any variation in the primary liquid instantaneous flow rate, the secondary liquid flow rate will be varied accordingly by responding to that variation;
Fig. 9 (a) represents, in the graph forms, the results obtained by actually examining (testing) the situation according to the proportional mixing control system of the present invention in which if there is any variation in the primary liquid (city water) instantaneous flow rate, the secondary liquid (city water) integrated flow rate will be varied according by responding to that variation and (b) represents, in the graph forms, the mixture (addition) ratio of the respective integrated flow rates for the primary and secondary liquids;
Fig. 10 represents, in the graph forms, the results obtained by actually examining (testing) the situation according to the proportional mixing control system of the present invention in which if there is any variation in the primary liquid (dextrin solution) instantaneous flow rate, the secondary liquid (city water) integrated flow rate will be varied accordingly by responding to that variation;
Fig. 11 is a concept diagram illustrating one example of the system configuration of the present invention;
Fig. 12 is a flow diagram illustrating one example of the steps in the proportional mixing control method of the present invention; and
Fig. 13 is a concept diagram illustrating one example of the proportional mixing control system of the present invention.

### BEST MODE OF EMBODYING THE INVENTION

In the mixing system in which the primary liquid is delivered from the primary liquid pump through the primary liquid conduit to the mixer, the secondary liquid is delivered from the secondary liquid pump through the secondary liquid conduit connected to the primary liquid conduit to the primary liquid conduit and is added to the primary liquid, and the primary and secondary liquids are then mixed together according to the predetermined mixture ratio, the highly precise proportional mixing system provided by the present invention can maintain the mixture ratio for the primary and secondary liquids to be constant by making use of the integrated flow rate of the primary and secondary liquids while recognizing the errors that have been integrated retroactively. When the highly precise proportional mixture is performed in the manner described above, it should be noted that the secondary liquid is not limited to a single liquid or a single class of the liquid but may be two or more liquids or two or more classes of the liquid.

In the proportional mixing system described above, furthermore, the highly precise proportional mixing system provided by the present invention estimates the future integrated errors from the past error trends to control the instantaneous flow rate of the primary liquid and/or the secondary liquid.

Heretofore, there has been no control method or control system that has been proposed to implement the concept of the integrated flow rate such as the one described above. For example, the control method disclosed in Patent Document 5 mentioned earlier does not implement the concept of the integrated flow rate, and determines the value to be set (how much operation is required) by multiplying the computed value by the correction factor. The control method disclosed in Patent Document 6 mentioned earlier is only concerned about controlling the average mixture ratio and does not implement the concept of controlling the successive mixture ratio so that the errors can be corrected.

As opposed to the prior art control system described above, the proportional mixing system provided by the present invention includes a first flow rate control means that is disposed in the primary liquid conduit and is operated to detect the primary liquid flow rate in the primary liquid conduit at every time of the predetermined period of time and provide output in the digital forms in response to the detected primary liquid flow rate, and is then operated to control, in the digital forms, the primary liquid flow rate in the primary liquid conduit, and a second flow rate control means that is disposed in the secondary liquid conduit and is operated to detect the secondary flow rate in the secondary liquid conduit and provide output in the digital forms in response to the detected secondary liquid flow rate, and is then operated to control, in the digital forms, the secondary liquid flow rate in the secondary liquid conduit.

Specifically, the first flow rate control means and the second flow rate control means is operated to control, in the digital forms, the primary liquid flow rate in the primary liquid conduit and the secondary liquid flow rate in the secondary liquid conduit, respectively. More specifically, those means are provided to control the primary liquid instantaneous flow rate in the primary liquid conduit and the secondary liquid instantaneous flow rate in the secondary liquid conduit, respectively.

"The predetermined period of time" in the above description corresponds to the reference period = sampling period.

The proportional mixing system provided by the present invention further includes an instantaneous flow rate value computing means, an actual integrated flow rate value computing means and an estimated integrated flow rate value computing means.

Specifically, the instantaneous flow rate value computing means is based on the primary liquid flow rate in the primary liquid conduit and the secondary liquid flow rate in the secondary liquid conduit as provided, in the digital forms, by the first flow rate control means and the second flow rate control means, respectively, and is operated to compute the primary liquid instantaneous flow rate value and the secondary liquid instantaneous flow rate value at every time when the predetermined period of time will have elapsed.

The actual integrated flow rate value computing means is based on the primary liquid flow rate in the primary liquid conduit and the secondary liquid flow rate in the secondary liquid conduit as provided, in the digital forms, by the first flow rate control means and the second flow rate control means, respectively, and is operated to compute the primary liquid actual integrated flow rate value and the secondary liquid actual integrated flow rate value at every time when the predetermined period of time will have elapsed.

The estimated integrated flow rate value computing means is based on the primary liquid flow rate in the primary liquid conduit and the secondary liquid flow rate in the secondary liquid conduit as provided, in the digital forms, by the first flow rate control means and the second flow rate control means, respectively, and is operated to compute the primary liquid estimated primary liquid integrated flow rate value being expected for the primary liquid and/or the estimated secondary liquid integrated flow rate value being expected for the secondary liquid at every time when the next predetermined period of time successively following the elapsed predetermined period of time during which the actual integrated flow rate value was computed will have elapsed one or more times.

The proportional mixing system provided by the present invention further includes a third flow rate control means that is based on the computed results obtained from the estimated integrated flow rate value computing means and the predetermined mixture ratio and is operated to control the primary liquid flow rate in the primary liquid conduit and/or the secondary liquid flow rate in the secondary liquid conduit.

As it is apparent from the configuration of the proportional mixing system provided by the present invention as described above, the proportional mixing control method includes the step of performing the proportional mixture of the primary and secondary liquids while managing those liquids based on not only the primary and/or secondary liquids (instantaneous flow rate) at the time when the particular reference period (sampling period) has elapsed but also the primary and/or secondary liquid integrated flow rates at the time when the particular reference period (sampling period) has elapsed.

As an example of the third flow rate control means described above, it may include a target secondary liquid integrated flow rate value computing means and a target secondary liquid instantaneous flow rate value computing means.

Specifically, the target secondary liquid integrated flow rate value computing means is operated to use the estimated primary liquid integrated flow rate value as computed by the estimated integrated flow rate value computing means and the predetermined mixture ratio to compute the target secondary liquid integrated flow rate value intended by the secondary liquid at every time when the next predetermined period of time successively following the elapsed predetermined period of time during which the actual integrated flow rate value was computed will have elapsed one or more times. For example, it is operated to compute the target secondary liquid integrated flow rate value by multiplying the estimated primary liquid integrated flow rate value and the predetermined mixture ratio.

The target secondary liquid instantaneous flow rate value computing means is also operated to compute the target secondary liquid instantaneous flow rate value intended by the secondary liquid in the secondary liquid conduit so that it can agree with the target secondary liquid integrated flow rate value as computed.

Based on the target secondary liquid instantaneous flow rate value as thus computed, the second flow rate control means is controlled so that the secondary liquid flow rate in the secondary liquid conduit can agree with the target secondary liquid instantaneous flow rate value as computed.

As another example of the third flow rate control means, it may include a target primary liquid integrated flow rate value computing means and a target primary liquid instantaneous flow rate value computing means.

Specifically, the target primary liquid integrated flow rate value computing means is operated to use the estimated secondary liquid integrated flow rate value as computed by the estimated integrated flow rate value computing means and the predetermined mixture ratio to compute the target primary liquid integrated flow rate value intended by the primary liquid at every time when the next predetermined period of time successively following the elapsed predetermined period of time during which the actual integrated flow rate value was computed will have elapsed one or more times. For example, it is operated to compute the target primary liquid integrated flow rate value by multiplying the estimated secondary liquid integrated flow rate value and the predetermined mixture ratio.

The target primary liquid instantaneous flow rate value computing means is operated to compute the target primary liquid instantaneous flow rate value intended by the primary liquid in the primary liquid conduit so that it can agree with the target primary liquid integrated flow rate value as computed.

Based on the target primary liquid instantaneous flow rate value as thus computed, the first flow rate control means is controlled so that the primary liquid flow rate in the primary liquid conduit can agree with the target primary liquid instantaneous flow rate value as computed.

When the highly precise proportional mixture occurs as described above, it should be noted that the secondary liquid is not limited to a single liquid or a single class of the liquid but may be two or more liquids or two or more classes of the liquid.

In the current embodiment shown and described, for example, the configuration may be such that the secondary liquid conduit connected to the primary liquid conduit includes a plurality of secondary liquid conducts connected to a plurality of corresponding secondary liquid pumps each delivering a different secondary liquid.

In the above example, the second flow rate control means is disposed in each of the plurality of secondary liquid conduits and is operated to detect the respective flow rates of the plurality of secondary liquids at every time of the predetermined period of time, to provide output in the digital forms in response to the respective detected flow rates, and to control, in the digital forms, the respective flow rates of the plurality of secondary liquid in the plurality of secondary liquid conduits.

Based on the primary liquid flow rate in the primary liquid conduit and the respective flow rates of the plurality of secondary liquids in the plurality of secondary liquid conduits as provided in the digital forms from the first flow rate control means and from the second flow rate control means, the instantaneous flow rate value computing means, the actual integrated flow rate value computing means and the estimated integrated flow rate value computing means is operated to compute the primary liquid instantaneous flow rate value and the respective instantaneous flow rate values of the plurality of secondary liquids as well as the primary liquid actual integrated flow rate value and the respective secondary liquid actual integrated flow rate values of the plurality of secondary liquids at the time when the predetermined period of time has elapsed, and is also operated to compute the estimated primary liquid integrated flow rate value being expected for the primary liquid and/or the respective estimated secondary liquid integrated flow rate values at every time when the next predetermined period of time successively following the elapsed predetermined period of time during which the actual integrated flow rate value was computed will have elapsed one or more times.

Based on the computed results obtained from the estimated integrated flow rate value computing means and the predetermined mixture ratio, the third flow rate control means is then operated to control the primary liquid flow rate in the primary liquid conduit and/or the respective flow rates of the plurality of secondary liquids in the plurality of secondary liquid conduits.

Using the estimated primary liquid integrated flow rate value provided by the estimated integrated flow rate value computing means and the predetermined mixture ratio, the target secondary liquid integrated flow rate value computing means included in the third flow rate control means and the target secondary liquid instantaneous flow rate value computing means is operated to compute the respective target secondary liquid integrated flow rate values to be intended by the plurality of secondary liquids at every time when the next predetermined period of time successively following the elapsed predetermined period of time during which the actual integrated flow rate value was computed will have elapsed one or more times, and is also operated to compute the respective target secondary liquid instantaneous flow rate values to be intended by the plurality of secondary liquids in the plurality of secondary liquid conduits so that they can agree with the target secondary liquid integrated flow rate value as computed.

Based on the target secondary liquid instantaneous flow rate value as thus computed, the second flow rate control means is then controlled so that the respective flow rates of the plurality of secondary liquids in the plurality of secondary liquid conduits can agree with the target secondary liquid instantaneous flow rate value as computed.

In the conventional prior art proportional mixing control system based on the uniloop control (Fig. 1) or the cascade control (Fig. 2), the mixing control was always performed by setting the respective instantaneous flow rates of the primary liquid and the secondary liquid as the target flow rate value. In the uniloop control or cascade control based system, if any variation in the primary or secondary liquid flow rate may be caused to occur by any external disturbances, this means that it will not assure the mixture ratio in any manner that had been integrated during the past times. That is, the conventional prior art system has only emphasized that the mixture ratio based on the respective instantaneous flow rates of the primary and secondary liquids should be made to agree with the target flow rate value.

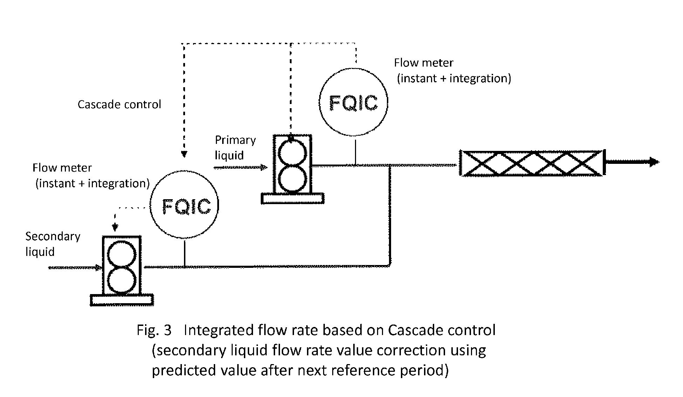

As opposed to the conventional prior art proportional mixing control system, the present invention is provided to employ the control system in which the mixture ratio is always based on the respective integrated flow rates of the primary and secondary liquids but not the instantaneous flow rates so that those integrated flow rates can be made to agree with the target mixture ratio (Fig. 3).

The output provided in the digital pulse forms from the respective flow meters for the primary and secondary liquids represents not only the instantaneous flow rate but also the integrated flow rate, and is used as the input to the digital controller which performs the arithmetic operations in any appropriate method. The instantaneous flow rate value for the primary or secondary liquids will be determined so that the mixture ratio that is based on the integrated flow rate thus obtained can be maintained to be constant.

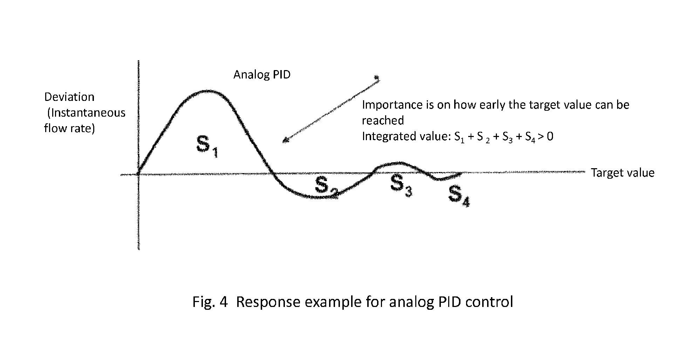

Fig. 4 is the concept diagram that represents, in the graph forms, the example of the response that have been returned from the conventional prior art proportional mixing control system in Fig. 1. In this system, the emphasis was only put on minimizing the errors (deviations) of the secondary liquid instantaneous flow rate from the target flow rate within the short period of time. For this reason, the integrated flow rate (integrated deviation value) during a particular period of time could not be reduced to zero (S1 + S2 + S3 + S4 > 0). The period of time during which the primary and secondary liquids were mixed together had elapsed before the integrated errors could be assured.

In the instance of Fig. 4, for example, the errors (deviations) of the secondary liquid integrated flow rate (integrated deviation value: S1 + S2 + S3 + S4) from the target flow rate would become greater than zero. Although the secondary liquid flow rate may agree with the target flow rate for a certain time, the secondary liquid integrated flow rate is still greater than the target flow rate, which means that more secondary liquid than that of the target flow rate has been mixed (added).

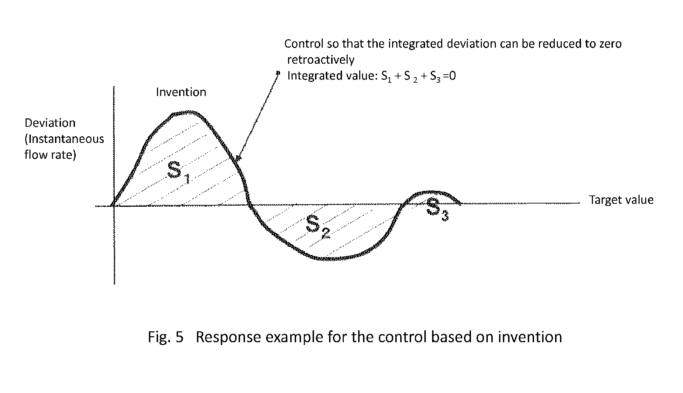

Fig. 5 is the concept diagram that represents, in the graph forms, the example of the response that may be returned from the proportional mixing control system of the present invention. In the proportional mixing control system of the present invention, the errors (deviations) of the secondary liquid flow rate from the target flow rate are not taken into account, but the integrated errors that have been integrated retroactively are recognized, and the future integrated errors (reference period) are estimated from the past error trends so that the secondary liquid flow rate can be controlled (adjusted). This means that the integrated flow rate (integrated deviation value) during a particular period will be reduced to zero (S1 + S2 + S3 = 0). In this way, the period of time during which the primary and secondary liquids are mixed together will elapse with the integrated errors being always assured.

In the instance of Fig. 5, for example, the errors (deviations) of the secondary liquid integrated flow rate (integrated deviation value: S1 + S2 + S3) from the target flow rate would be reduced to zero. Although the secondary liquid flow rate may not agree with the target flow rate, the secondary liquid integrated flow rate will still agree with the target flow rate, which means that the primary and secondary liquids will be mixed (added) while the mixture ratio for the primary and secondary liquids will be maintained to be constant.

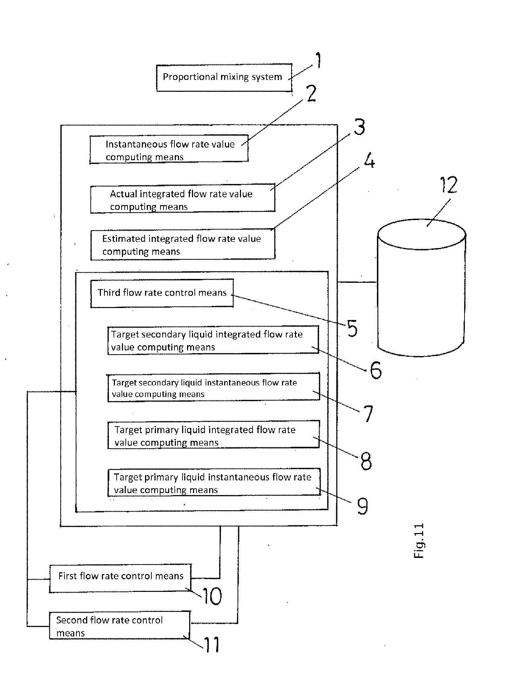

Fig. 11 illustrates one example of the general configuration of the proportional mixing system in accordance with one embodiment of the present invention. The computer is configured to include a controller under which the first flow rate control means 10 and the second flow rate control means 11, all of which have been described above, may be controlled.

The controller in the computer includes the instantaneous flow rate value computing means 2, the actual integrated flow rate value computing means 3, the estimated integrated flow rate value computing means 4, the third flow rate control means 5, the target secondary liquid integrated flow rate value computing means 6, the target secondary liquid instantaneous flow rate value computing means 7, the target primary liquid integrated flow rate value computing means 8 and the target primary liquid instantaneous flow rate value computing means 9, all of which have been described above.

In addition to the controller, the computer includes a hard disk, any external storage means and like on which a database 12 may be stored. The database 12 contains the information required by the proportional mixing system of the present invention in controlling the proportional mixing process, such as the information concerning the mixture of the primary liquid delivered from the primary liquid pump through the primary liquid conduit to the mixer and the secondary liquid delivered from the secondary liquid pump to the primary liquid conduit through the secondary liquid conduit connected to the primary liquid conduit and added to the primary liquid as well as the predetermined mixture ratio.

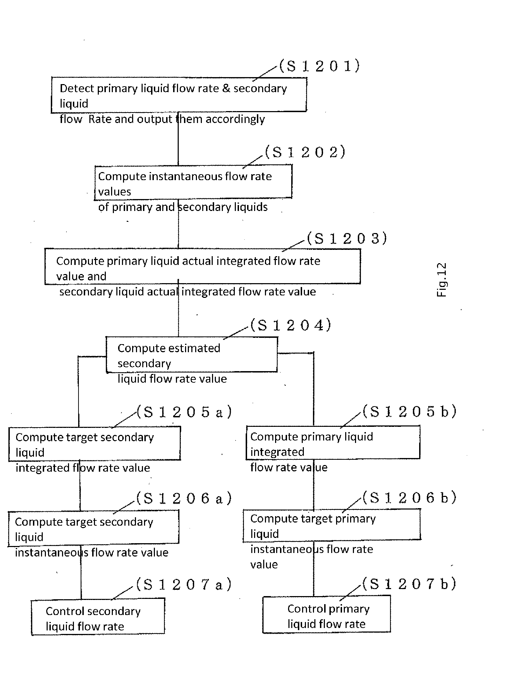

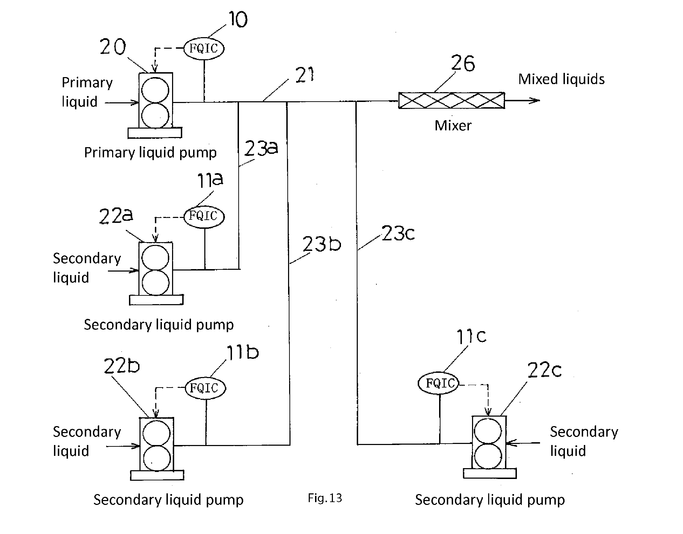

The following describes one example of the proportional mixing control by the proportional mixing system of the present invention by referring to Fig. 12 and Fig. 13.

Specifically, Fig. 13 illustrates the step of mixing the primary liquid and the secondary liquids together according to the predetermined mixture ratio, in which the primary liquid is delivered from the primary liquid pump 20 through the primary liquid conduit 21 to the mixer 26 and a plurality of secondary liquids are delivered from the corresponding secondary liquid pumps to the primary liquid conduit 21 through a plurality of corresponding secondary liquid conduits 23a, 23b, 23c connected to the primary liquid conduit 21 and are added to the primary liquid.

Each of the secondary liquid conduits 23a, 23b, 23c is connected to each of the corresponding secondary liquid pumps 22a, 22b, 22c, each of which supplies a different secondary liquid. Those different secondary liquids will thus be mixed with the primary liquid according to the predetermined mixture ratio.

The first flow rate control means 10 described in Fig. 11 is disposed in the primary liquid conduit 21, and is operated to detect the primary liquid flow rate in the primary liquid conduit 21 at every time of the predetermined period of time (sampling period) to provide output in the digital forms and is be operated to control, in the digital forms, the primary liquid flow rate in the primary liquid conduit 21.

In the system shown in Fig. 13, the second flow rate control means 11 described in Fig. 11 is disposed in each of the corresponding secondary liquid conduits 23a, 23b, 23c as indicated by respective reference numerals 11a, 11b, 11c, and is operated to detect the flow rate of each of the plurality of secondary liquids in the plurality of secondary liquid conduits 23a, 23b, 23c at every time of the predetermined period of time (sampling period) to provide output in the digital forms and is also operated to control, in the digital forms, the plurality of secondary liquid flow rates in the plurality of secondary liquid conduits 23a, 23b, 23c.

Firstly, the following steps will be described below for the case in which only one class of the secondary liquid is delivered from the corresponding secondary liquid pump 22a through the corresponding secondary liquid conduit 23a and the mixture will then occur according the predetermined mixture ratio. In this case, the secondary liquid pump 22b and the corresponding secondary liquid conduit 23b and the secondary liquid pump 22c and the corresponding secondary liquid conduit 23c are not in use.

The first flow rate control means 10 and the second flow rate control means 11a is operated to detect the primary liquid flow rate in the primary liquid conduit 21 and the secondary liquid flow rate in the secondary liquid conduit 23a at every time of the predetermined period of time (sampling period), and is operated to provide output in the digital forms in response to the respective detected flow rates (S1201).

Based on the respective outputs in the digital forms from the first flow rate control means 10 and the second flow rate control means 11a, the instantaneous flow rate value computing means 2 is operated to compute the primary liquid instantaneous flow rate value and the secondary liquid instantaneous flow rate value at the time when the predetermined period of time will have elapsed (S1202).

Similarly, based on the respective outputs in the digital forms from the first flow rate control means 10 and the second flow rate control means 11a, the actual integrated flow rate value computing means 3 is operated to compute the primary liquid actual integrated flow rate value and the secondary liquid actual integrated flow rate value at the time when the predetermined period of time will have elapsed (S1203).

Based on the respective outputs in the digital forms provided by the first flow rate control means 10 and the second flow rate control means 11a, furthermore, the estimated integrated flow rate value computing means 4 is operated to compute the estimated primary liquid integrated flow rate value being expected for the primary liquid and/or the estimated secondary liquid integrated flow rate value being expected for the secondary liquid at every time when the next predetermined period of time successively following the elapsed predetermined period of time during which the actual integrated flow rate value was computed by the actual integrated flow rate value computing means 3 will have elapsed one or more times (S1204).

Next, by multiplying the estimated primary liquid flow rate value and the predetermined mixture ratio, the target secondary liquid integrated flow rate value computing means 6 is operated to compute the target secondary liquid integrated flow rate value being targeted by the secondary liquid at every time when the next predetermined period of time successively following the elapsed predetermined period of time during which the actual integrated flow rate value was computed by the actual integrated flow rate value computing means 3 will have elapsed one or more times (S1205a).

Then, the target secondary liquid instantaneous flow rate value computing means 7 is operated to compute the target secondary liquid instantaneous flow rate value being targeted by the secondary liquid in the secondary liquid conduit 23a so that it can agree with the target secondary liquid integrated flow rate value (S1206a).

Based on the target secondary liquid instantaneous flow rate value as thus computed in the above step, the third flow rate control means 5 is operated to control the second flow rate control means 11a so that the secondary liquid flow rate in the secondary liquid conduit 23a can agree with the target secondary liquid instantaneous flow rate value as thus computed in the preceding step (S1207a).

Based on the estimated secondary liquid integrated flow rate value and the predetermined mixture ratio, otherwise, the target primary liquid integrated flow rate value computing means 8 is operated to compute the target primary liquid integrated flow rate value being targeted by the primary liquid at every time when the next predetermined period of time successively following the elapsed predetermined period of time during which the actual integrated flow rate value was computed by the actual integrated flow rate value computing means 3 will have elapsed one or more times (S1205b).

Then, the target primary liquid instantaneous flow rate value computing means 9 is operated to compute the primary liquid instantaneous flow rate value being targeted by the primary liquid in the primary liquid conduit 21 so that it can agree with the target primary liquid integrated flow rate value as thus computed in the preceding step (S1206b).

Based on the target primary liquid instantaneous flow rate value as thus computed in the preceding step, the third flow rate control means 5 is operated to control the first flow rate control means 10 so that the primary liquid flow rate in the primary liquid conduit 21 can agree with the target primary liquid instantaneous flow rate value (S1207b).

In the system for mixing the primary liquid and the secondary liquid together according to the predetermined mixture ratio in which the primary liquid is delivered from the primary liquid pump through the primary liquid conduit to the mixer and the secondary liquid is delivered from the secondary liquid pump to the primary liquid conduit through the secondary liquid conduit connected to the primary liquid conduit and is then added to the primary liquid, it is apparent from the foregoing description that the present invention allows for the proportional mixture of the primary liquid and the secondary liquid while the management is being made on the basis of the primary liquid and/or secondary liquid flow rates (instantaneous flow rates) at the time when the particular reference period (sampling period) has elapsed as well as on the primary liquid and/or secondary liquid integrated flow rates at the time when the particular reference period (sampling period) has elapsed.

Through the steps S1205a to S1207a described above, the secondary liquid instantaneous flow rate may be controlled (adjusted) by estimating the future integrated errors (reference period) from the past error trends, and through the steps S1205b to S1207b described above, the primary liquid instantaneous flow rate is controlled (adjusted) by estimating the future integrated errors (reference period) from the past error trends.

Although it has been described above that the single secondary liquid or single class of the liquid is delivered from the corresponding secondary liquid pump 22a through the corresponding secondary liquid conduit 23a and is then mixed together, a plurality of secondary liquids may also be delivered from the corresponding secondary liquid pumps 22b and 22c through the corresponding secondary liquid conduits 23b and 23c and may then be mixed with the primary liquid. In the latter case, the steps S1201 to S1204 and the steps S1205a and S1206a may be performed in accordance with the outputs returned from the respective second flow rate control means 11a, 11b, 11c. Based on the respective target secondary liquid instantaneous flow rate values as computed, the third flow rate control means 5 is operated to control the respective second flow rate control means 11a, 11b, 11c so that the respective secondary liquid flow rates can agree with the target secondary liquid instantaneous flow rate values as computed (S1207a), and then the primary liquid and the plurality of secondary liquids can be mixed together according to the predetermined mixture ratio.

### EMBODIMENT

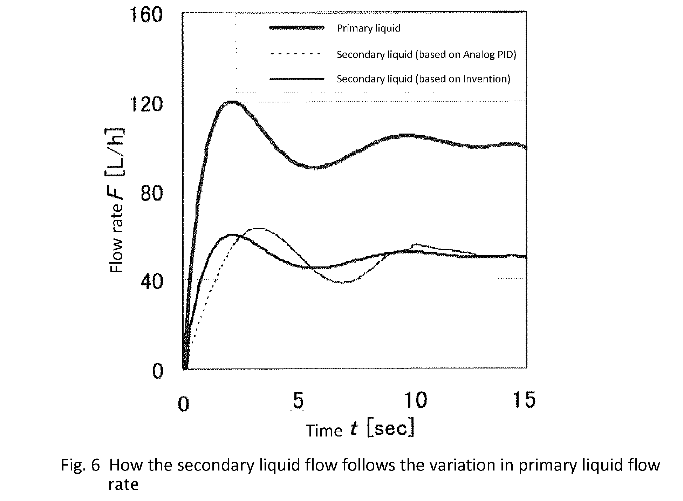

Supposing the situation in which if there is any variation in the primary liquid instantaneous flow rate when the single class of the secondary liquid is delivered and mixed with the primary liquid, the secondary liquid instantaneous flow rate will respond to that variation. In this situation, the results obtained by causing the computer to simulate the responses that would be returned from the prior art (based on the analog PID control) as well as from the present invention are given in the graph forms in Fig. 6.

In the present invention, the responses are obtained by following the steps S1205a to S1207a described above in which the secondary liquid instantaneous flow rate is controlled (adjusted) by estimating the future integrated errors (reference period) from the past error trends.

In the conventional prior art as well as in the present invention, the variation in the secondary liquid flow rate will be followed so that it can be maintained to be in its constant state within the short time of about 15 seconds. There is no remarkable difference between the prior art and the present invention as far as the secondary liquid flow rate will respond quickly to the primary liquid flow rate.

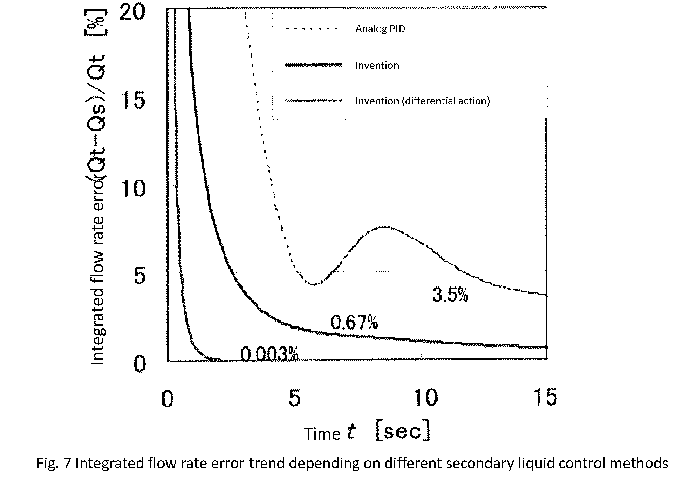

Supposing the situation in which if there is any variation in the primary liquid instantaneous flow rate, the errors in the secondary liquid integrated flow rate will be varied accordingly. In this situation, the results obtained by causing the computer to simulate the responses that would be returned from the conventional prior art (based on the analog PID control) and the present invention are given in the graph forms in Fig. 7. It is found that there is a difference in the integrated flow rate errors between the conventional prior art and the present invention. It is found, therefore, that the secondary liquid flow rate errors for the present invention have been reduced to be smaller than those for the prior art.

As far as the variation in the secondary liquid flow rate (Fig. 6) is concerned, it is found that the variation in the secondary liquid flow rate can respond to the variation in the primary liquid flow rate within the short time of about 15 seconds and can thus be maintained to be in its constant state. During that period of time, the errors for the prior art are found to represent 3.5% whereas the errors for the present invention are found to represent 0.67%, meaning that it is clearly smaller for the present invention. When the secondary liquid instantaneous flow rate is controlled (adjusted) by estimating the future integrated errors (reference period) from the past error trends, it is found that the errors for the present invention represent 0.003%, meaning that it is remarkably smaller, which is near to about zero.

In the actual periods of time, however, the responsiveness of the secondary liquid pump's motor is the principal factor that causes the flow rate errors to occur. For this reason, it is necessary to estimate the reference period by considering the responsiveness of the motor.

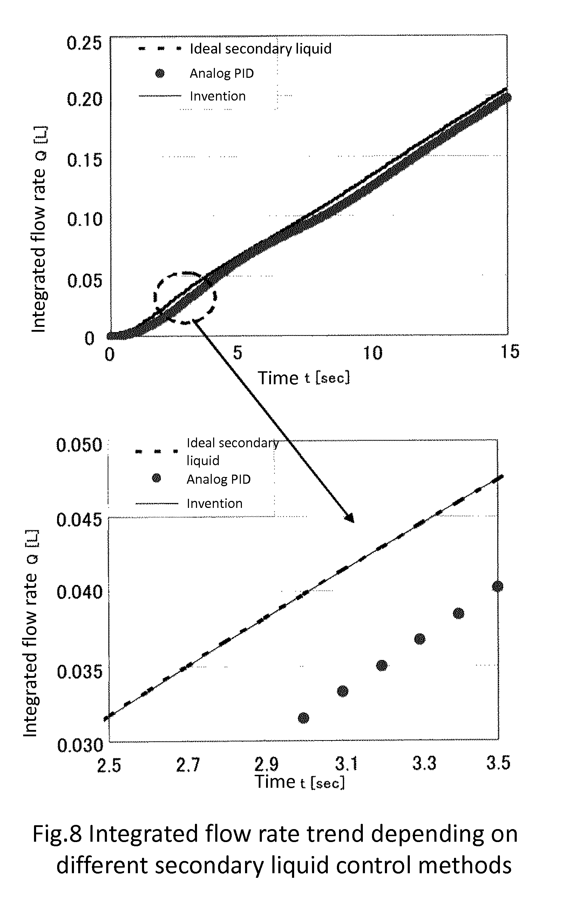

Supposing the situation in which the secondary liquid integrated flow rate will respond to any variation that may occur in the primary liquid instantaneous flow rate, the results obtained by causing the computer to simulate the responses from the prior art (based on the analog PID control) as well as from the present invention are given in the graph forms in Fig. 8. In the present invention, the responses are obtained by following the steps S1205a to S1207a described above in which the secondary liquid instantaneous flow rate is controlled (adjusted) by estimating the future integrated errors (reference period) from the past error trends.

It is noted there is a difference in the integrated flow rate between the conventional prior art and the present invention, which means that for the conventional prior art, the secondary liquid integrated flow rate differs greatly from the target flow rate (ideal flow rate) whereas for the present invention, the secondary liquid integrated flow rate is equal to the target flow rate and the errors are near to zero.

The conventional prior art is only intended to allow the secondary liquid instantaneous flow rate to agree with the target flow rate. If the secondary liquid flow rate was too much (which means that too much secondary liquid was added) during the past times or if the secondary liquid flow rate was not sufficient (which means that sufficient secondary liquid was not added) during the past time, this situation could not be assured in any way. For the present invention, however, it can be said that the results obtained by the simulation were the same as those originally designed.

As it is apparent from the above description, it can be said that the present invention provides the very highly precise proportional mixing (proportional adding) system as compared against the prior art.

By using the control system and control method of the present invention which implement the steps S1205a to S1207a described above in Fig. 12 for controlling (adjusting) the secondary liquid instantaneous flow rate by estimating the future integrated errors (reference period) from the past error trends, the actual mixing (adding) precision was examined for the low viscosity fluid (city water) and for the high viscosity fluid (dextrin solution)

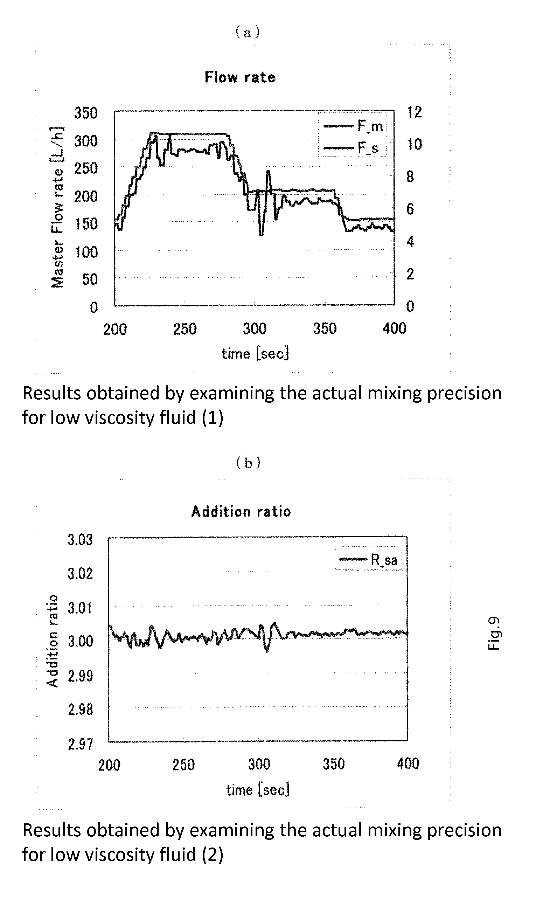

Fig. 9 represents the results obtained by examining the actual mixing (adding) precision for the low viscosity fluid using the control system that implements the principles of the present invention.

In the mixture testing apparatus that was used for the above purpose, the primary liquid (city water) flow rate was varied in the range of 150 to 300L/h and is controlled so that the secondary liquid (city water) flow rate could be equal to 3% of the primary liquid flow rate.

As indicated in Fig. 9 (a), it is found that even if the primary liquid flow rate (F_m) was varied in the short time, the secondary liquid flow rate (F_s) would follow the primary liquid flow rate with the high precision. As indicated in Fig. 9 (b), it is found that the variation in the mixture (adding) ratio between the primary and secondary liquid integrated flow rates could be controlled within about 0.2% at the most.

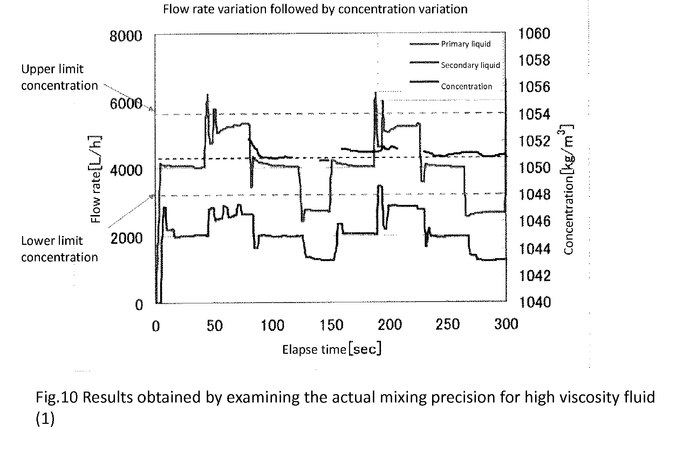

Fig. 10 presents the results obtained by examining the actual mixing (adding) precision for the high viscosity fluid using the control system that implements the principles of the present invention.

In the mixture testing apparatus that was used for the above purpose, the primary liquid (dextrin solution) flow rate was varied in the range of 3000 to 5000L/h and was controlled so that the secondary liquid (city water) flow rate could be equal to 50% of the primary liquid flow rate.

### APPLICABLE INDUSTRIAL FIELDS

Even if there is a slight variation in the primary and/or secondary liquid flow rate that may be caused to occur by any external disturbances or even if the primary liquid pump and/or any of the secondary liquid pumps should be started up or stopped frequently and repeatedly during a short period of time, the present invention allows the proper mixture ratio to be recovered within a very short time. As such, the products that conform to the standards or specifications can be manufactured by mixing the primary and secondary liquids together.

As it is apparent from the above description, the present invention will be expected to provide the following effects listed below:
(1) The reduction in the manufacturing costs that can be achieved by preventing the added liquid from being excessive regardless of whether the added liquid is a single liquid or single class of the liquid or two or more liquids or two or more classes of the liquid (reduction of possible loss).
(2) The improved yield that can be achieved by keeping any remnants of the liquid as little as possible regardless of whether the added liquid is a single liquid or single class of the liquid or two or more liquids or two or more classes of the liquid (reduction of possible loss).
(3) The assured product uniformity that can be achieved by maintaining the proper mixture ratio.

In addition to the above expected effects, the following specific applications can be expected:
(1) The process of concentrating or reducing the fruit juice, coffee and the like.
(2) The process of mixing the fruit juice or sauce with fermented milk or beverages.
(3) The process of mixing a hardener or pigment with an adhesive agent.
(4) The process of mixing two or more detergents (two or more liquids) together.

## Claims

1. A proportional mixing system for mixing a primary liquid being delivered from a primary liquid pump to a mixer through a primary liquid conduit together with a secondary liquid being delivered from a secondary liquid pump to said primary liquid conduit through a secondary liquid conduit connected to said primary liquid conduit and thus being added to said primary liquid, said mixture of the primary and secondary liquids being performed according to a predetermined mixture ratio, wherein said proportional mixing system comprises:
a first flow rate control means disposed in said primary liquid conduit and operated at every time of the predetermined period of time to detect the flow rate of said primary liquid in said primary liquid conduit for providing output in the digital forms in response to the detected flow rate and for controlling in the digital forms the flow rate of said primary liquid in said primary liquid conduit;
a second flow rate control means disposed in said secondary liquid conduit and operated at every time of said predetermined period of time to detect the flow rate of said secondary liquid in said secondary liquid conduit for providing output in the digital forms in response to the detected flow rate and for controlling, in the digital forms, the flow rate of said secondary liquid in said secondary liquid conduit;
based on the flow rate of said primary liquid in said primary liquid conduit and the flow rate of said secondary liquid in said secondary liquid conduit that have been provided in the digital forms by said first flow rate control means and said second flow rate control means,
an instantaneous flow rate value computing means for computing an instantaneous flow rate value of said primary liquid and an instantaneous flow rate value of said secondary liquid at every time when said predetermined period of time will have elapsed;
an actual flow rate value computing means for computing a primary liquid actual integrated flow rate value of said primary liquid and a secondary liquid actual integrated flow rate value at every time when said predetermined period of time will have elapsed;
an estimated integrated flow rate computing means for computing an estimated primary liquid integrated flow rate value being expected for said primary liquid and/or an estimated secondary liquid integrated flow rate value being expected for said secondary liquid at every time when said next predetermined period of time successively following said elapsed predetermined period of time during which said actual integrated flow rate value was computed will have elapsed one or more times; and
based on the computed result provided in the digital forms by said estimated integrated flow rate value computing means and said predetermined mixture ratio,
a third flow rate control means for controlling the flow rate of said primary liquid in said primary liquid conduit and/or the flow rate of said secondary liquid in said secondary liquid conduit.

2. A proportional mixing system as defined in Claim 1, wherein said third flow rate control means includes:
using the estimated primary liquid integrated flow rate value as computed by said estimated integrated flow rate value computing means and said predetermined mixture ratio,
a target secondary liquid integrated flow rate value computing means for computing a target secondary liquid integrated flow rate value intended by said secondary liquid at every time when said next predetermined period of time successively following said elapsed predetermined period of time during which said actual integrated flow rate value was computed will have elapsed one or more times; and
a target secondary liquid instantaneous flow rate value computing means for computing a target secondary liquid instantaneous flow rate value intended by said secondary liquid in said secondary liquid conduit so that it can agree with said target secondary liquid flow rate value as computed, wherein based on said target secondary instantaneous flow rate values as computed, said second flow rate control means is controlled so that said secondary flow rate in said secondary liquid conduit can agree with said target secondary liquid instantaneous flow rate value.

3. A proportional mixing system as defined in Claim 1, wherein said third flow rate control means includes:
using the estimated secondary liquid integrated flow rate value as computed by said estimated integrated flow rate value computing means and said predetermined mixture ratio,
a target primary liquid integrated flow rate value computing means for computing the target primary liquid integrated flow rate value intended by the primary liquid at every time when said next predetermined period of time successively following said elapsed predetermined period of time during which said actual integrated flow rate value was computed will have elapsed one or more times; and
a target primary liquid instantaneous flow rate value computing means for computing a target primary liquid instantaneous flow rate value intended by said primary liquid in said primary liquid conduit so that it can agree with said target primary liquid integrated flow rate value as computed, wherein based on said target primary liquid flow rate value as computed, said first flow rate control means is controlled so that the said primary liquid flow rate in said primary liquid conduit can agree with said target primary liquid flow rate value as computed.

4. A proportional mixing system as defined in Claim 1, wherein said secondary liquid conduit connected to said primary liquid conduit includes a plurality of secondary liquid conduits each being connected to each corresponding one of a plurality of secondary liquid pumps each of which delivers a different secondary liquid;
said second flow rate control means is disposed in each of said plurality of secondary liquid conduits and is operated to detect the flow rate of each of said different secondary liquid in each of said plurality of secondary liquid conduits at every time of said predetermined period of time for providing output in the digital forms of the detected flow rates and controlling, in the digital forms, the flow rates of said plurality of secondary liquids in said plurality of secondary liquid conduits in response to the respective detected flow rates;
based on the flow rate of said primary liquid in said primary liquid conduit as provided in the digital forms by said first flow rate control means and the flow rate of each of said secondary liquid in each of said secondary liquid conduits as provided in the digital forms by said second flow rate control means,
said instantaneous flow rate computing means, said actual integrated flow rate value computing means and said estimated integrated flow rate value computing means are each operated to compute the instantaneous flow rate value of said primary liquid and the flow rate value of each of said plurality of secondary liquids, and to compute the primary liquid actual integrated flow rate value and the secondary liquid actual integrated flow rate value of each of said plurality of secondary liquids at the time when said predetermined period of time will have elapsed, and
said instantaneous flow rate computing means, said actual integrated flow rate value computing means and said estimated integrated flow rate value computing means are each operated to compute the estimated primary liquid integrated flow rate value being expected for said primary liquid and/or the estimated secondary liquid integrated flow rate being expected for each of said plurality of secondary liquids at every time when said next predetermined period of time successively following said elapsed predetermined period of time during which said actual integrated flow rate value was computed will have elapsed one or more times; and
based on the computed results as provided in the digital forms by said estimated integrated flow rate value computing means and said predetermined mixture ratio, said third flow rate control means is operated to control the flow rate of said primary liquid in said primary liquid conduit and/or the flow rate of each of said plurality of secondary liquids in each of said plurality of secondary liquid conduits.

5. A proportional mixing system as defined in Claim 4, wherein said third flow rate control means includes:
using the estimated primary liquid integrated flow rate value as provided in the digital forms by said estimated integrated flow rate value computing means and said predetermined mixture ratio,
a target secondary liquid integrated flow rate value computing means for computing the target secondary liquid integrated flow rate value intended by each of said plurality of secondary liquids at every time when said next predetermined period of time successively following said elapsed predetermined period of time during which said actual integrated flow rate value was computed will have elapsed one or more times; and
a target secondary liquid instantaneous flow rate value computing means for computing the target secondary liquid instantaneous flow rate value intended by each of said plurality of secondary liquids in each of said plurality of secondary liquid conduits so that it can agree with said target secondary liquid flow rate value as computed, wherein
based on said target secondary liquid flow rate value as computed,
said third flow rate control means is operated to control said second liquid flow rate control means so that the flow rate of each of said plurality of secondary liquids in each of said plurality of secondary liquid conduits can agree with said target secondary liquid instantaneous flow rate as computed.
